# EUROPEAN PATENT APPLICATION

(11) **EP 4 786 042 A1**
(43) Date of publication of application: **05.08.2026**
(21) Application number: 24887958.7
(22) Date of filing: 05.11.2024
(51) Int. Cl.: B01J 19/00, C08F 210/16, C08F 210/06, C08F 210/08, C08F 2/01, B01J 19/24, B01J 4/00, B01D 36/00

(54) **PREPARATION DEVICE AND METHOD FOR MULTICOMPONENT COPOLYMERIZED POLYPROPYLENE**

(30) Priority: 06.11.2023 CN 202311463179
(71) Applicant: Tianhua Institute of Chemical Machinery and Automation Co., Ltd., Lanzhou, Gansu 730060 (CN); Tianhua Institute (Nanjing) Intelligent Manufacturing Co., Ltd, Nanjing, Jiangsu Province 211100 (CN)
(72) Inventor: ZHANG, Wanyao, Lanzhou, Gansu 730060 (CN); LIANG, Julong, Lanzhou, Gansu 730060 (CN); ZHANG, Xiaoyang, Lanzhou, Gansu 730060 (CN); WANG, Hui, Lanzhou, Gansu 730060 (CN); SHEN, Yanshun, Lanzhou, Gansu 730060 (CN); HUANG, Shuai, Lanzhou, Gansu 730060 (CN); WANG, Jiangang, Lanzhou, Gansu 730060 (CN); LIANG, Yuanyue, Lanzhou, Gansu 730060 (CN); WANG, Shijun, Lanzhou, Gansu 730060 (CN); QIN, Yunlong, Lanzhou, Gansu 730060 (CN); LI, Yinghai, Lanzhou, Gansu 730060 (CN)
(74) Representative: Murgitroyd & Company
(86) International application number: PCT/CN2024/130011
(87) International publication number: WO 2025/098346

(57) **Abstract**

The present application belongs to the field of chemical engineering and discloses an device and method for preparing multicomponent copolymerized polypropylene. The preparation device includes a propylene feeding pipeline, a catalyst feeding pipeline, an ethylene feeding pipeline, a butene feeding pipeline, a polypropylene discharging pipeline, a catalyst pretreatment unit, a polymerization unit, a low-pressure degassing unit, and a powder inactivation and drying unit. The preparation device designed in the present application can realize the production of a high-performance ternary or multicomponent copolymerized polypropylene products, also has the advantages of short process flow, low energy consumption, economy, safety and large operational flexibility, and can realize the multi-capacity device layout of 50,000 to 800,000 tons per year.

## Description

### CROSS-REFERENCE

This application claims priority to Chinese Patent Application No. 202311463179.X, filed with the China National Intellectual Property Administration (CNIPA) on November 6, 2023, entitled "PREPARATION DEVICE AND METHOD FOR MULTICOMPONENT COPOLYMERIZED POLYPROPYLENE", the entire contents of which are incorporated herein by reference.

### Technical Field

The present application pertains to the field of chemical engineering, and more specifically relates to a preparation device and method for multicomponent copolymerized polypropylene.

### Background Art

Currently, internationally available processes for producing multicomponent copolymerized polypropylene are primarily classified into the gas-phase process and the liquid-phase + gas-phase process. The gas-phase process suffers from drawbacks such as reactor short-circuiting, small particle size, low rubber phase content, and high odor, thereby constraining the development and breakthrough of multicomponent copolymer products; in contrast, the liquid-phase + gas-phase process for producing multicomponent copolymerized polypropylene involves long process flow paths, high failure rates, lengthy deactivation and degreasing steps, high energy consumption, tall building layout requirements, and high capital investment, factors that adversely affect end-product profitability and plant operational stability.

### Summary of the Invention

### Purpose of the Application

To overcome the deficiencies of the prior art, the present application provides a preparation device and method for multicomponent copolymerized polypropylene. The preparation device enables production of high-performance ternary or multicomponent copolymerized polypropylene products, while featuring a shortened process flow, low energy consumption, economic feasibility, enhanced operational flexibility, and scalability to accommodate multi-capacity configurations ranging from 50,000 to 800,000 tons per year.

### Solution

To achieve the above purpose, the present application adopts the following technical solutions.

To achieve the foregoing object, in one aspect, the present application provides a preparation device for multicomponent copolymerized polypropylene, including a propylene feeding pipeline, a catalyst feeding pipeline, an ethylene feeding pipeline, a butene feeding pipeline, a polypropylene discharging pipeline, a catalyst pretreatment unit, a polymerization unit, a low-pressure degassing unit, and a powder inactivation and drying unit, wherein,
the catalyst pretreatment unit includes a catalyst stirring tank, and the bottom portion of the catalyst stirring tank is connected to the top portion of the catalyst stirring tank and the top portion of the vertical liquid-phase reactor, respectively;
the polymerization unit includes a propylene cooling and separation column, a loop reactor, and n vertical liquid-phase reactors provided in parallel, where n ≥ 1; the top portion of the vertical liquid-phase reactor is connected to the upper portion of the propylene cooling and separation column, the bottom portion of the vertical liquid-phase reactor is connected to the loop reactor, and a hydrogen make-up line is provided at the upper portion of the vertical liquid-phase reactor; a reflux line is provided at the bottom portion of the propylene cooling and separation column, and the reflux line is connected to the upper portion of the propylene cooling and separation column along with the upper portion of the vertical liquid-phase reactor, respectively;
the low-pressure degassing unit includes a low-pressure bag filter, and the bottom portion of the low-pressure bag filter is connected to the deactivation zone of the integrated powder inactivation and drying machine; the loop reactor is connected to the low-pressure bag filter;
the powder inactivation and drying unit includes an integrated powder inactivation and drying machine, a propylene water scrubber, a film recovery unit, a low-pressure steam feeding pipeline, and a low-pressure nitrogen feeding pipeline;
the integrated powder inactivation and drying machine includes a deactivation zone, a degassing zone, and a drying zone provided in sequence; a solid-gas separator I is provided at the dome of the deactivation zone, and a gas-distribution device I is provided at the bottom portion of the deactivation zone; the top portion of the solid-gas separator I is connected to the propylene water scrubber, the bottom portion of the solid-gas separator I is connected to the deactivation zone, and the top of the propylene water scrubber is connected to a gas-distribution device II; the gas-distribution device I is connected to the low-pressure steam feeding pipeline and the low-pressure nitrogen feeding pipeline, respectively; the solid-gas separator II is provided at the dome of the degassing zone, and the gas-distribution device II is provided at the bottom portion of the degassing zone; the top portion of the solid-gas separator II is connected to the film recovery unit, the bottom portion of the solid-gas separator II is connected to the degassing zone, and the film recovery unit is connected to the gas-distribution device I; the solid-gas separator III is provided at the dome of the drying zone, the gas-distribution device III is provided at the bottom portion of the drying zone, and the lower portion of the drying zone is connected to the polypropylene discharging pipeline; the top portion of the solid-gas separator III is connected to the gas-distribution device III, and the bottom portion of the solid-gas separator III is connected to the drying zone;
the catalyst feeding pipeline is connected to the catalyst stirring tank;
the propylene feeding pipeline is connected to the catalyst stirring tank, the propylene cooling and separation column, and the loop reactor, respectively;
the ethylene feeding pipeline is connected to the vertical liquid-phase reactor and the loop reactor; the butene feeding pipeline is connected to the loop reactor.

In the present application, the main catalyst, cocatalyst, electron donor, delipidation agent, hexane, and refined propylene are fed into the catalyst stirring tank; preferably, under agitation by a gate-type main impeller inside the tank and reverse agitation by an auxiliary anti-settling device at the tank bottom, a stable and homogeneous suspended slurry is formed. The above-pre-treated slurry is transferred to the vertical liquid-phase reactor for polymerization under a propylene flush.

According to the present application, preferably, the catalyst pretreatment unit further includes a catalyst drum hoist device and a catalyst mixer, and the bottom portion of the catalyst drum hoist device is connected to the top portion of the catalyst stirring tank. The catalyst drum hoist device is used to hold the pre-mixed and qualified catalyst slurry. In the present application, a catalyst mixer may additionally be provided upstream of the vertical liquid-phase reactor; the inlet of the catalyst mixer is connected to the propylene feeding pipeline, the bottom portion of the catalyst stirring tank, and the catalyst feeding pipeline, respectively, and the outlet is connected to the vertical liquid-phase reactor. Use of the catalyst mixer eliminates the need for conventional plunger pumps or non-standard equipment, reduces system complexity, shortens catalyst residence time prior to reaction, enhances catalyst activity upon entering the reactor, and improves catalyst productivity.

Two types of reactors are provided in the polymerization unit of the present application: a vertical liquid-phase reactor and a loop reactor; wherein, to ensure continuous production during maintenance, n vertical liquid-phase reactors are provided in parallel. When the mixed material from the catalyst pretreatment unit enters the vertical liquid-phase reactor, propylene monomer undergoes homopolymerization or random copolymerization under the action of the pre-treated catalyst slurry at specified operating pressure and temperature, yielding homopolymers or random copolymers with low fine-powder content and large particle size, providing an effective "placeholder" for multicomponent copolymer production in the loop reactor. During the reaction, to effectively prevent agglomeration, blockage, or runaway polymerization at the bottom portion of the vertical liquid-phase reactor caused by stirring dead zones, the impeller of the vertical liquid-phase reactor is preferably of a bidirectional agitation type. The reaction product from the vertical liquid-phase reactor is preferably transferred to the loop reactor via devices such as a plug valve or a diverter valve. To ensure continuous and uninterrupted operation of the device, the vertical liquid-phase reactor is preferably connected to the low-pressure bag filter. Thus, when the loop reactor is shut down for maintenance or due to a malfunction, the reaction product from the vertical liquid-phase reactor can be directly routed to the low-pressure bag filter without requiring a full plant shutdown. In the loop reactor, the material undergoes further multicomponent copolymerization, thereby increasing production capacity. High-velocity circulation of the internal material in the loop reactor is preferably achieved via a bottom-mounted axial-flow pump to prevent wall adhesion, runaway polymerization, and the like. In order to promptly convey the reaction products from the loop reactor to the low-pressure bag filter, the present application preferably provides the loop reactor with a nuclear level detection system to detect the density of the rapidly flowing material, thereby determining the reaction rate and monitoring the timing of discharge. Meanwhile, to prevent the occurrence of wet material or overpressure during monomer propylene vaporization and recovery after the reaction product enters the low-pressure bag filter, the pipeline connecting the loop reactor and the low-pressure bag filter is preferably equipped with a low-pressure steam tracing system.

In the polymerization unit, the propylene cooling and separation column is provided to cool and separate unreacted propylene, ethylene monomers, and non-condensable gases; liquid-phase ethylene, propylene, and other monomers discharged from the bottom portion of the column are partially fed to the vertical liquid-phase reactor for continued reaction to improve propylene monomer utilization, and partially recycled back to the column; the non-condensable gas discharged from the top portion of the column is returned to the battery limit; by using a pressure-regulating valve group and on-line analytical instruments of the reaction system, the reaction composition is adjusted in real time to control product quality.

According to the present application, it is preferred that the diameter of the loop reactor is 100-1000 mm and the volume of the vertical liquid-phase reactor is 10-90 m³. The combined dimensions of the two reactors enable a multi-capacity configuration and production capacity of 50,000-800,000 tons per year.

In the present application, the low-pressure bag filter receives reaction products from the loop reactor and/or the vertical liquid-phase reactor, and the powder contained in the reaction products is conveyed via the bottom portion of the low-pressure bag filter to the integrated powder inactivation and drying machine. To ensure efficient solid-gas separation while minimizing powder entrainment in the recovered monomer gas, the low-pressure bag filter is preferably a cyclonic sintered-metal bag filter. The use of a cyclonic sintered-metal bag filter not only effectively prevents fine powder from entering the recovery unit but also significantly reduces the frequent occurrence of cage frame fracture and powder leakage in conventional bag filters caused by pipeline vibration during discharge. Discharge from the bottom portion of the low-pressure bag filter may exhibit phenomena such as sticking, bridging, poor flow, and gas channeling due to differences in product grades; therefore, an air-lock rotary valve is preferably provided between the low-pressure bag filter and the integrated powder inactivation and drying machine. The air-lock rotary valve enables timely transfer of powder from the bag filter to the downstream integrated powder inactivation and drying machine, achieving efficient material transfer while preventing backflow of downstream moisture vapor into the reaction system.

According to the present application, the low-pressure degassing unit preferably further includes a filter, a deep chiller, and a compressor connected in sequence; the top portion of the low-pressure bag filter is connected to the middle portion of the filter, and the compressor is connected to the polymerization unit. Hydrocarbons entrained in the reaction products are recovered to the propylene cooling and separation column and/or the loop reactor of the polymerization unit via the filter, deep chiller, and compressor. The filter may be a dual-in-line filter to ensure continuous and highly efficient operation. The pulse purge gas for the low-pressure bag filter may be inter-stage gas from the compressor, thereby eliminating the introduction of fresh nitrogen into the reaction system and ensuring compositional stability of the reaction system.

In the present application, the powder from the low-pressure bag filter undergoes deactivation, degassing, and drying in the integrated powder inactivation and drying machine, and the final powder is withdrawn as the polypropylene product. Preferably, the integrated powder inactivation and drying machine further includes an additive unit, which adds a predetermined proportion of additives to the dried powder; the diluted and formulated powder is then withdrawn as the polypropylene product. In order to accomplish the above-mentioned objectives, the additive unit includes an additive dumping station and an additive feed scale connected in sequence, wherein the additive feed scale is connected to the top portion of the drying zone.

According to the present application, preferably, a moisture content analyzer is provided at the top portion of solid-gas separator III. The use of the moisture content analyzer enables effective evaluation of the powder drying performance, timely adjustment of the powder bed height, and ensures the quality of the discharged powder.

To further recover hydrocarbons from gas vent of each unit, preferably, the preparation device further includes a recovery unit; an upper portion of the propylene water scrubber is connected to the recovery unit; the film recovery unit is connected to gas-distribution device I and the recovery unit, respectively; the top portion of solid-gas separator III is connected to gas-distribution device III and the recovery unit, respectively.

Another aspect of the present application provides a preparation method for multicomponent copolymerized polypropylene, wherein the preparation method is carried out in the aforementioned preparation device and includes:
1) uniformly mixing the catalyst and propylene in a catalyst stirring tank, completing pre-treatment, and then feeding the mixture into a vertical liquid-phase reactor to perform polymerization;
2) in the vertical liquid-phase reactor, feeding the polymerization product to a loop reactor for further multicomponent copolymerization; sending tail gas generated during the reaction to the propylene cooling and separation column; and a portion of separated liquid-phase components is returned to the vertical liquid-phase reactor to continue participating in the reaction;
3) in the loop reactor, feeding the multicomponent copolymerization product to the low-pressure bag filter; sending separated solid powder to the integrated powder inactivation and drying machine; and the gas components are optionally filtered, cryogenically cooled, and compressed before being returned to the propylene cooling and separation column and/or the loop reactor;
4) successively deactivating, degassing, and drying the solid powder from the low-pressure bag filter in the integrated powder inactivation and drying machine, optionally mixing with an additive, and then discharging as the multicomponent copolymerized polypropylene product;
5) optionally recovering hydrocarbons from gas vent generated in steps 2) to 4).

In a specific embodiment of the present application, the main catalyst, cocatalyst, delipidation agent, electron donor, and hexane or white oil are charged into the catalyst stirring tank in a predetermined ratio; the mixture is pre-treated with propylene monomer under heat removal by jacketed chilled water for a predetermined time; and then the mixture is injected into the vertical liquid-phase reactor under flushing with cooled propylene. The catalyst pre-treatment time is determined based on the characteristics of each catalyst, the pre-polymerization degree, and the heat removal rate of the chilled water; hexane or white oil added during pre-treatment can be removed in the polymerization reaction unit or the integrated powder inactivation and drying machine to achieve deodorization.

The mixture undergoes homopolymerization or random copolymerization in the vertical liquid-phase reactor; the resulting homopolymer or random copolymer is fed to the loop reactor; and the tail gas generated is sent to the propylene cooling and separation column. In the vertical liquid-phase reactor, part of the heat generated by the reaction is removed via heat exchange with the jacket chilled water and the refrigerant in the propylene cooling and separation column, while another part is removed by the latent heat of propylene vaporization, thereby maintaining thermal balance within the reactor. In the propylene cooling and separation column, unreacted monomers, such as propylene and ethylene, from the vertical liquid-phase reactor are recovered inside the column by cooling; a portion is returned to the vertical liquid-phase reactor via the propylene booster pump to continue participating in the reaction, and another portion is recycled back into the propylene cooling and separation column.

In the loop reactor, homopolymerization or random copolymerization products further undergo multicomponent copolymerization with ethylene and butene comonomers, and the resulting multicomponent copolymer is sent to the low-pressure bag filter. During the reaction, the temperature and pressure of the loop reactor are controlled by the temperature-control water pump. The multicomponent copolymer powder, after removal of entrained hydrocarbons in the low-pressure bag filter, is discharged from the bottom portion of the low-pressure bag filter and sent to the integrated powder inactivation and drying machine; the removed entrained hydrocarbons are recovered through the filter, the deep chiller, and the compressor, and then fed to the propylene cooling and separation column and/or the loop reactor for continued participation in the polymerization reaction.

In the deactivation zone of the integrated powder inactivation and drying machine, low-pressure steam is uniformly introduced into the deactivation zone by nitrogen via gas-distribution device I; the powder from the low-pressure bag filter is fully deactivated in the deactivation zone through controlled residence time; the deactivated powder passes through solid-gas separator I, where the separated gas-phase components are sent to the propylene water scrubber, and the solid-phase components are returned to the deactivation zone. In the propylene water scrubber, the separated non-condensable gas is discharged from the top portion of the column and sent to the degassing zone as a degassed component; the monomeric propylene recovered at the column bottom is heated and vaporized by low-pressure steam and then sent to the recovery unit.

The non-condensable gas from the top portion of the propylene water scrubber enters the degassing zone as a degassing medium via gas-distribution device II to perform degassing treatment on the powder from the deactivation zone. After passing through solid-gas separator II, the degassed powder yields separated gas-phase components, which are sent to the film recovery unit for further separation of nitrogen and propylene gases; the solid-phase components are returned to the degassing zone. The nitrogen separated by the film recovery unit is recycled to gas-distribution device I in the deactivation zone for reuse, while the separated propylene gas is sent to the recovery unit.

In the drying zone, moisture content is removed from the powder originating from the degassing zone using high-velocity circulating nitrogen. Nitrogen is uniformly dispersed into the powder bed via gas-distribution device III; after a predetermined residence time, the powder from the drying zone is dried and subsequently separated by solid-gas separator III; the separated moist nitrogen is pressurized by the circulating hot nitrogen blower, heat-exchanged via a nitrogen heat exchanger, and then recycled; the moisture analyzer at the dome outlet of the drying zone is used to adjust the fresh nitrogen flow rate, regulate the bed height, and assess the powder drying performance; hydrocarbon gases in the circulating hot nitrogen are sent to the recovery unit. The solid-phase component separated by solid-gas separator III is returned to the drying zone.

After drying, additives are introduced at the top portion of the drying zone of the integrated powder inactivation and drying machine; aided by the end baffle of the unit, the powder and additives are thoroughly mixed, and the mixture is quantitatively conveyed to the circulating nitrogen pneumatic conveying system via the air-lock rotary valve at the bottom portion of the drying zone of the integrated powder inactivation and drying machine; the material is then promptly delivered to the finished powder silo using an ejector, a diverter valve, etc. At the top portion of the finished powder silo, nitrogen is separated from fines; hydrocarbons in the clean nitrogen are promptly discharged to the recovery unit and returned to the battery limit within the circulating nitrogen system; after the circulating nitrogen pneumatic conveying system is upgraded with additional equipment, the circulating nitrogen is reused to convey qualified powder from the integrated powder inactivation and drying machine. The powder, pre-mixed with diluted additives in the finished powder silo, allows selection between powder packaging or granule extrusion and pelletizing, depending on customer requirements.

### Advantageous Effects

Compared with the prior art, the advantages of the present application are as follows:
1) The preparation device disclosed herein can not only produce high-performance ternary or multicomponent copolymerized polypropylene, but also features a short process flow, low energy consumption, economic safety, high operational flexibility, and enables multi-capacity plant configurations with capacities ranging from 50,000 to 800,000 tons per year.
2) The catalyst pretreatment unit of the present application imposes no restriction on catalyst type; either a powder catalyst or a slurry catalyst may be employed, thereby reducing dependence on the catalyst in the polymerization reaction.
3) In the polymerization reaction unit of the present application, the vertical liquid-phase reactor and the loop reactor can be combined in multiple configurations with differing specifications to enable multi-capacity plant layouts and meet diverse production capacity requirements.
4) The integrated powder inactivation and drying machine in the present application incorporates an integrated powder inactivation and drying machine, whose design effectively reduces process configuration, lowers steam consumption, decreases energy consumption, and enhances product competitiveness.
5) An additive unit is provided in within the drying zone of the powder inactivation and drying unit of the present application, optimizing additive-powder blending directly in the drying zone. This reduces extrusion-floor design complexity; meanwhile, the added additive provides cooling treatment to the powder, lowering capital investment and improving energy efficiency.
6) The present application employs centralized treatment of the three wastes, thereby enhancing environmental performance.

Other features and advantages of the present application will be described in detail in the subsequent detailed description section.

### Brief Description of the Drawings

The foregoing and other objects, features, and advantages of the present application will become more apparent from the following detailed description of exemplary embodiments with reference to the accompanying drawings, wherein like reference numerals in the exemplary embodiments of the present application generally denote like components.
FIG. 1 shows a schematic diagram of the preparation device according to one embodiment of the present application.
FIG. 2 shows a schematic diagram of the catalyst pretreatment unit according to one embodiment of the present application.
FIG. 3 shows a schematic diagram of the polymerization unit according to one embodiment of the present application.
FIG. 4 shows a schematic diagram of the low-pressure degassing unit according to one embodiment of the present application.
FIG. 5 shows a schematic diagram of the powder inactivation and drying unit according to one embodiment of the present application.

List of reference numerals:
1. Propylene feed pump; 2. Catalyst stirring tank; 3. Catalyst mixing pump; 4. Propylene refrigeration economizer; 5. Catalyst drum hoist device; 6. Catalyst mixer; 7. Vertical liquid-phase reactor; 8. Propylene cooling and separation column; 9. Propylene booster pump; 10. Loop reactor; 11. Axial-flow pump; 12. Temperature-control water pump; 13. Low-pressure bag filter; 14. Rotary discharge valve; 15. Filter; 16. Deep chiller; 17. Compressor; 18. Integrated powder inactivation and drying machine; 19. Solid-gas separator I; 20. Solid-gas separator II; 21. Solid-gas separator III; 22. Propylene water scrubber; 23. Monomer vaporization tank; 24. Film recovery unit; 25. Circulating hot nitrogen blower; 26. Nitrogen heater; 27. Ejector; 28. Additive dumping station; 29. Additive feed scale; 30. Finished powder silo; 31. Powder discharge rotary valve.

### Detailed Description of the Invention

To make the objectives, technical solutions, and advantages of the embodiments of the present application clearer, the technical solutions of the embodiments of the present application will be described hereinbelow in a clear and complete manner. Clearly, the described embodiments constitute only a part of, rather than all of, the embodiments of the present application. Based on the embodiments disclosed herein, all other embodiments obtained by a person skilled in the art without exercising inventive effort fall within the scope of protection of the present application. Unless otherwise expressly stated, throughout the specification and claims, the term "comprise" or variations thereof (e.g., "comprises" or "comprising") shall be construed as meaning inclusion of the stated element or component, without excluding any other element or component.

Furthermore, numerous specific details are provided in the following detailed description to facilitate a better understanding of the present application. Those skilled in the art will appreciate that the present application may be practiced without certain of these specific details. In some embodiments, materials, components, methods, and means well known to those skilled in the art are not described in detail so as to highlight the core subject matter of the present application.

Hereinafter, preferred embodiments of the present application will be described in greater detail. Although preferred embodiments of the present application are described below, it should be understood that the present application may be embodied in various forms and is not limited to the embodiments set forth herein.

### Example 1

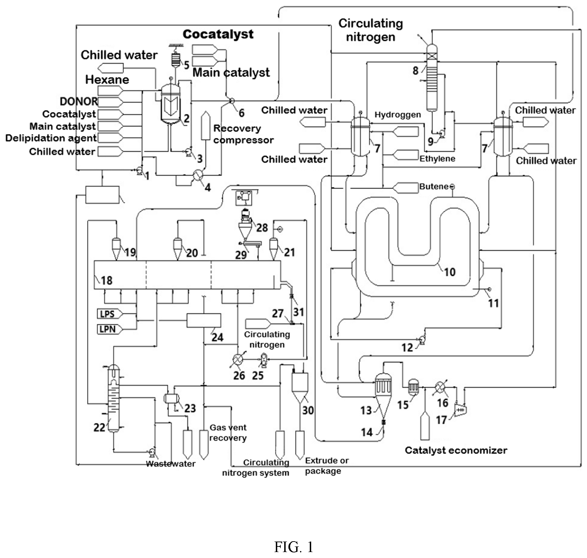

A preparation device for multicomponent copolymerized polypropylene, as shown in FIG. 1, the preparation device includes a propylene feeding pipeline, a catalyst feeding pipeline, an ethylene feeding pipeline, a butene feeding pipeline, a polypropylene discharging pipeline, a catalyst pretreatment unit, a polymerization unit, a low-pressure degassing unit, a powder inactivation and drying unit, and a recovery unit, wherein,

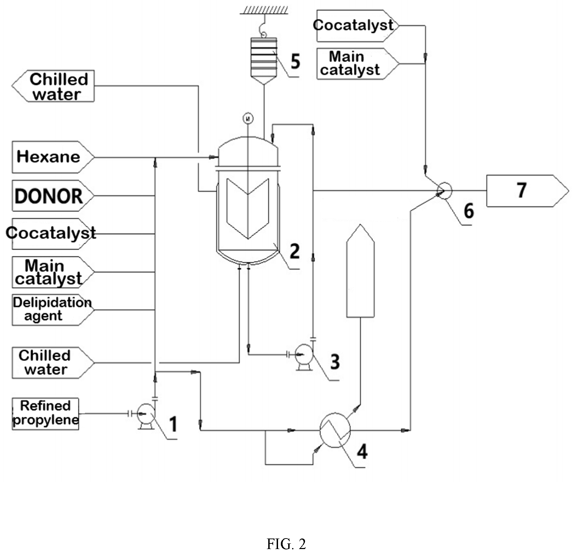

The catalyst pretreatment unit, as shown in FIG. 2, includes a propylene feed pump 1, a catalyst stirring tank 2, a catalyst mixing pump 3, a propylene refrigeration economizer 4, a catalyst drum hoist device 5, and a catalyst mixer 6,
the catalyst feeding pipeline is connected to the catalyst stirring tank 2;
the propylene feeding pipeline is connected to the catalyst stirring tank 2 and the propylene refrigeration economizer 4 via the propylene feed pump 1, respectively;
the top portion of the catalyst stirring tank 2 is connected to the bottom portion of the catalyst drum hoist device 5, and the bottom portion of the catalyst stirring tank 2 is connected in sequence to the catalyst mixing pump 3 and the top portion of the catalyst stirring tank 2;
the catalyst mixer 6 is connected to the catalyst mixing pump 3, the propylene refrigeration economizer 4, and a vertical liquid-phase reactor 7, respectively.

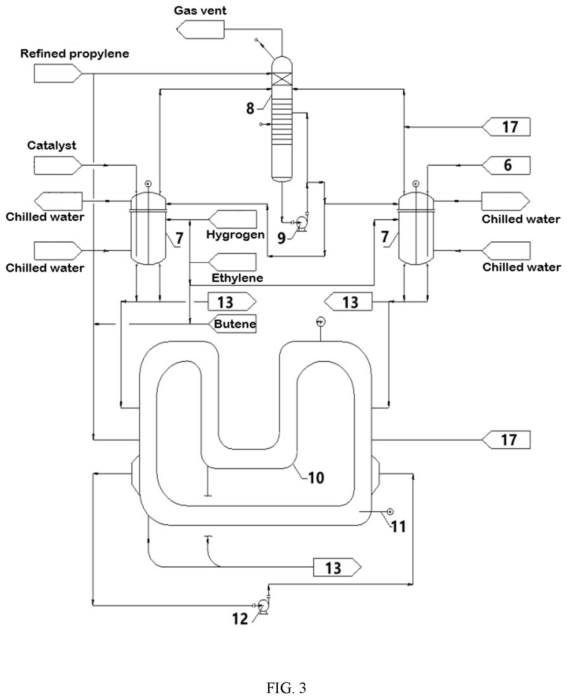

The polymerization unit, as shown in FIG. 3, includes a propylene cooling and separation column 8, a loop reactor 10, and two vertical liquid-phase reactors 7 provided in parallel; the top portion of the vertical liquid-phase reactor 7 is connected to the upper portion of the propylene cooling and separation column 8, the bottom portion of the vertical liquid-phase reactor 7 is connected to the loop reactor 10, and a hydrogen make-up line is provided in the upper portion of the vertical liquid-phase reactor 7; a reflux line is provided at the bottom portion of the propylene cooling and separation column 8, and the reflux line is connected to the upper portion of the propylene cooling and separation column 8 and the upper portion of the vertical liquid-phase reactor 7, respectively; the loop reactor 10 is connected to a low-pressure bag filter 13; the vertical liquid-phase reactor 7 is connected to a low-pressure bag filter 13; the loop reactor 10 is equipped with a nuclear level detection system and an axial-flow pump 11; the line connecting the loop reactor 10 to the low-pressure bag filter 13 is equipped with a low-pressure steam tracing system. The loop reactor 10 has a diameter of 100-1000 mm, and the vertical liquid-phase reactor 7 has a volume of 10-90 m³.

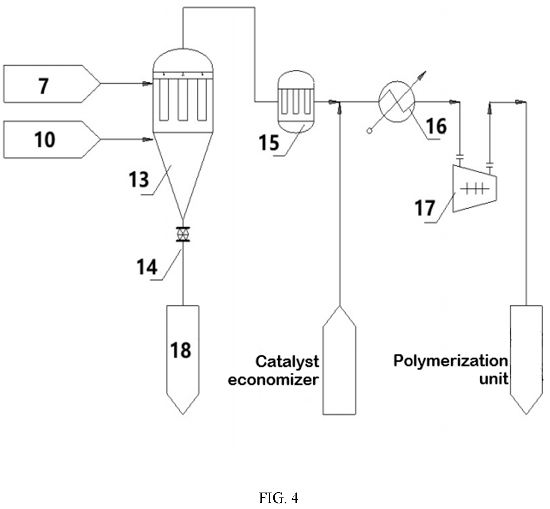

The low-pressure degassing unit, as shown in FIG. 4, includes a low-pressure bag filter 13 and a filter 15, a deep chiller 16, and a compressor 17 connected in sequence; the bottom portion of the low-pressure bag filter 13 is connected to the deactivation zone of an integrated powder inactivation and drying machine 18; the top portion of the low-pressure bag filter 13 is connected to the middle portion of the filter 15, and the compressor 17 is connected to the propylene cooling and separation column 8 and the loop reactor 10, respectively. The low-pressure bag filter 13 is a cyclonic sintered-metal bag filter, and a rotary discharge valve 14 is provided between the low-pressure bag filter 13 and the integrated powder inactivation and drying machine 18.

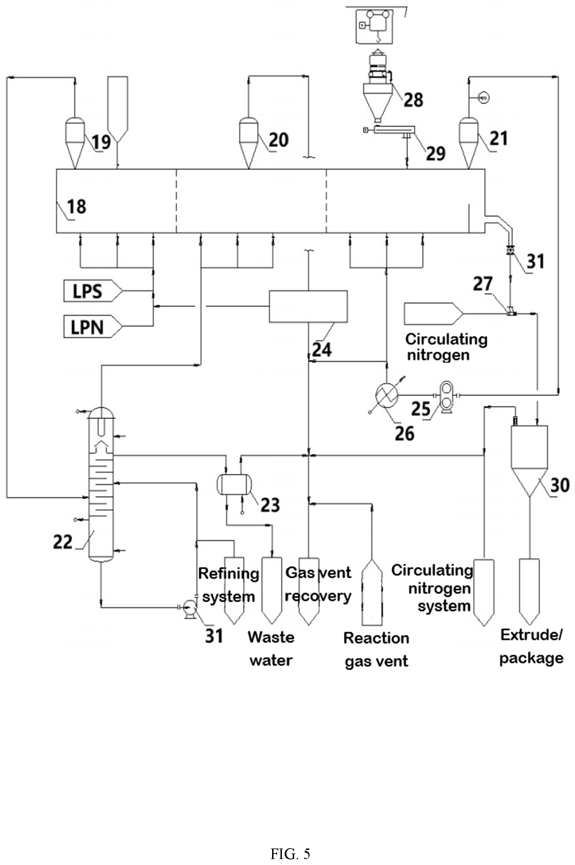

The powder inactivation and drying unit, as shown in FIG. 5, includes an integrated powder inactivation and drying machine 18, a propylene water scrubber 22, a monomer vaporization tank 23, a film recovery unit 24, an additive unit, a low-pressure steam feeding pipeline, and a low-pressure nitrogen feeding pipeline;
the integrated powder inactivation and drying machine 18 includes a deactivation zone, a degassing zone, and a drying zone connected in sequence; the dome of the deactivation zone is equipped with a solid-gas separator I 19, and the gas-distribution device I is provided at the bottom portion of the deactivation zone; the top portion of the solid-gas separator I 19 is connected to the propylene water scrubber 22, the bottom portion of the solid-gas separator I 19 is connected to the deactivation zone, the top portion of the propylene water scrubber 22 is connected to gas-distribution device II, and the upper portion thereof is connected to the monomer vaporization tank 23 and the recovery unit; gas-distribution device I is connected to a low-pressure steam feeding pipeline and a low-pressure nitrogen feeding pipeline, respectively; a solid-gas separator II 20 is provided at the dome of the degassing zone, and the gas-distribution device II 20 is provided at the bottom portion of the degassing zone; the top portion of the solid-gas separator II 20 is connected to the film recovery unit 24, the bottom portion of the solid-gas separator II 20 is connected to the degassing zone, and the film recovery unit 24 is connected to gas-distribution device I 19 and the recovery unit; a solid-gas separator III 21 is provided at the dome of the drying zone, the gas-distribution device III is provided at the bottom portion of the drying zone, and the lower portion of the drying zone is sequentially connected to the finished powder silo 30 and the polypropylene discharging pipeline; the top portion of solid-gas separator III 21 is connected to gas-distribution device III and the recovery unit, and the solids outlet is connected to the drying zone.

The additive unit includes the additive dumping station 28 and the additive feed scale 29 connected in sequence, and the additive feed scale 29 is connected to the top portion of the drying zone; a moisture content analyzer is provided on the gas outlet line of solid-gas separator III 21.

The propylene feeding pipeline is connected to the catalyst stirring tank 2, the propylene cooling and separation column 8, and the loop reactor 10, respectively; an ethylene feeding pipeline is connected to the vertical liquid-phase reactor 7; a butene feeding pipeline is connected to the loop reactor 10.

Using the above preparation device, multicomponent copolymerized polypropylene is prepared according to the following specific steps:
The main catalyst, cocatalyst, delipidation agent, electron donor, and hexane are charged into the catalyst stirring tank 2 in a predetermined ratio; the mixture is pre-treated with propylene monomer under heat removal by jacketed chilled water for a predetermined time, and then injected into the vertical liquid-phase reactor 7 under flushing with cooled propylene.

Homopolymerization or random copolymerization of the mixed material occurs in the vertical liquid-phase reactor 7; the resulting homopolymer or random copolymer is sent to the loop reactor 10, and the off-gas generated is sent to the propylene cooling and separation column 8. In the vertical liquid-phase reactor 7, part of the reaction heat is removed via heat exchange with the jacketed chilled water and the refrigerant in the propylene cooling and separation column, and part is removed via heat absorption during propylene vaporization, thereby ensuring thermal balance within the reactor. In the propylene cooling and separation column 8, unreacted monomers, including propylene and ethylene, from the vertical liquid-phase reactor 7 are recovered within the column via cooling; a portion is returned to the vertical liquid-phase reactor 7 by the propylene booster pump 9 to continue participating in the reaction, and another portion is recycled back into the propylene cooling and separation column 8.

In the loop reactor 10, the homopolymer or random copolymer further undergoes multicomponent copolymerization with ethylene and butene comonomers; the resulting multicomponent copolymer is sent to the low-pressure bag filter 13. During the reaction, the temperature and pressure of the loop reactor are controlled by the temperature-control water pump 12.

The multicomponent copolymer powder, after removal of entrained hydrocarbons in the low-pressure bag filter 13, is discharged from the bottom portion of the low-pressure bag filter 13 and conveyed to the integrated powder inactivation and drying machine 18; the removed entrained hydrocarbons are recovered through the filter 15, the deep chiller 16, and the compressor 17, and then fed back to the propylene cooling and separation column 8 and the loop reactor 10 to continue participating in the reaction.

In the deactivation zone of the integrated powder inactivation and drying machine 18, low-pressure steam is uniformly introduced into the deactivation zone by nitrogen via gas-distribution device I; the powder from the low-pressure bag filter is fully deactivated in the deactivation zone by virtue of its residence time; the deactivated powder passes through solid-gas separator I 19, where the separated gas-phase components are sent to the propylene water scrubber 22 and the solid-phase components are returned to the deactivation zone. In the propylene water scrubber 22, the separated non-condensable gas is discharged from the top portion of the tower and sent to the degassing zone as a degassing component; the monomeric propylene recovered at the bottom portion of the tower after cooling is vaporized by low-pressure steam heating and then sent to the recovery unit.

The non-condensable gas from the top portion of the propylene water scrubber 22 enters the degassing zone via gas-distribution device II as a degassing medium to degas the powder from the deactivation zone. After passing through solid-gas separator II 20, the degassed powder yields gas-phase components sent to film recovery unit 24 for further separation of nitrogen and propylene, while the solid-phase components are returned to the degassing zone. The nitrogen separated by the film recovery unit 24 is recycled to gas-distribution device I in the deactivation zone for reuse, whereas the separated propylene gas is sent to the recovery unit.

In the drying zone, moisture content is removed from the powder originating from the degassing zone using high-velocity circulating nitrogen. Nitrogen is uniformly distributed into the powder bed via gas-distribution device III; after a predetermined residence time, the dried powder from the drying zone is separated by solid-gas separator III 21; the moist nitrogen stream is compressed by circulating hot nitrogen blower 25, heated by nitrogen heater 26, and then recycled; the moisture analyzer at the dome outlet of the drying zone is used to adjust the fresh nitrogen flow rate, regulate the bed height, and assess the powder drying performance; hydrocarbon gases entrained in the circulating hot nitrogen are compressed by the blower and sent to the recovery unit. The solid-phase component separated by solid-gas separator III 21 is returned to the drying zone.

After drying, an additive is introduced at the top portion of the drying zone of integrated powder inactivation and drying machine 18; the powder and additive are thoroughly mixed under the action of the end baffle of integrated powder inactivation and drying machine 18, and then quantitatively conveyed to the circulating nitrogen pneumatic conveying system via air-lock rotary valve 21 at the bottom portion of the drying zone of integrated powder inactivation and drying machine 18; the material is promptly transported to finished powder silo 30 using ejector 27. At the top portion of finished powder silo 30, nitrogen is separated from fines; hydrocarbons in the clean nitrogen are promptly purged from the circulating nitrogen system to the recovery unit and returned to the battery limit; after adding a booster unit to the circulating nitrogen pneumatic conveying system, the recycled nitrogen is reused to convey qualified powder from integrated powder inactivation and drying machine 18. The powder, diluted and pre-mixed with additives in finished powder silo 30, may be subjected to either powder packaging or granule extrusion and pelletizing, depending on requirements.

Finally, it should be noted that: the above-mentioned embodiments are merely illustrative of the technical solution of the present application and do not limit the same; while the present application has been described in detail with reference to the foregoing embodiments, those skilled in the art will appreciate that: the technical solutions disclosed in the above-mentioned embodiments can still be modified, or some of the technical features thereof can be replaced by equivalents; however, such modifications or substitutions do not cause the corresponding technical solutions to depart from the spirit and scope of the embodiments of the present application.

### Industrial Applicability

The present application belongs to the field of chemical engineering and discloses an device and method for preparing multicomponent copolymerized polypropylene. The preparation device includes a propylene feeding pipeline, a catalyst feeding pipeline, an ethylene feeding pipeline, a butene feeding pipeline, a polypropylene discharging pipeline, a catalyst pretreatment unit, a polymerization unit, a low-pressure degassing unit, and a powder inactivation and drying unit. The preparation device designed in the present application can realize the production of a high-performance ternary or multicomponent copolymerized polypropylene products, also has the advantages of short process flow, low energy consumption, economy, safety and large operational flexibility, and can realize the multi-capacity device layout of 50,000 to 800,000 tons per year.

## Claims

1. A preparation device for multicomponent copolymerized polypropylene, **characterized in that** the preparation device comprises a propylene feeding pipeline, a catalyst feeding pipeline, an ethylene feeding pipeline, a butene feeding pipeline, a polypropylene discharging pipeline, a catalyst pretreatment unit, a polymerization unit, a low-pressure degassing unit, and a powder inactivation and drying unit, wherein,
the catalyst pretreatment unit comprises a catalyst stirring tank, and the bottom portion of the catalyst stirring tank is connected to the top portion of the catalyst stirring tank and the top portion of the vertical liquid-phase reactor, respectively;
the polymerization unit comprises a propylene cooling and separation column, a loop reactor, and n vertical liquid-phase reactors provided in parallel, where n ≥ 1; the top portion of the vertical liquid-phase reactor is connected to the upper portion of the propylene cooling and separation column, the bottom portion of the vertical liquid-phase reactor is connected to the loop reactor, and a hydrogen make-up line is provided at the upper portion of the vertical liquid-phase reactor; a reflux line is provided at the bottom portion of the propylene cooling and separation column, and the reflux line is connected to the upper portion of the propylene cooling and separation column and the upper portion of the vertical liquid-phase reactor, respectively;
the low-pressure degassing unit comprises a low-pressure bag filter, and the bottom portion of the low-pressure bag filter is connected to a deactivation zone of an integrated powder inactivation and drying machine; the loop reactor is connected to the low-pressure bag filter;
the powder inactivation and drying unit comprises the integrated powder inactivation and drying machine, a propylene water scrubber, a film recovery unit, a low-pressure steam feeding pipeline, and a low-pressure nitrogen feeding pipeline;
the integrated powder inactivation and drying machine comprises the deactivation zone, a degassing zone, and a drying zone provided in sequence; a solid-gas separator I is provided at a dome of the deactivation zone, and a gas-distribution device I is provided at the bottom portion of the deactivation zone; the top portion of the solid-gas separator I is connected to the propylene water scrubber, the bottom portion of the solid-gas separator I is connected to the deactivation zone, and the top of the propylene water scrubber is connected to a gas-distribution device II; the gas-distribution device I is connected to the low-pressure steam feeding pipeline and the low-pressure nitrogen feeding pipeline, respectively; the solid-gas separator II is provided at the dome of the degassing zone, and the gas-distribution device II is provided at the bottom portion of the degassing zone; the top portion of the solid-gas separator II is connected to the film recovery unit, the bottom portion of the solid-gas separator II is connected to the degassing zone, and the film recovery unit is connected to the gas-distribution device I; the solid-gas separator III is provided at the dome of the drying zone, a gas-distribution device III is provided at the bottom portion of the drying zone, and the lower portion of the drying zone is connected to the polypropylene discharging pipeline; the top portion of the solid-gas separator III is connected to the gas-distribution device III, and the bottom portion of the solid-gas separator III is connected to the drying zone;
the catalyst feeding pipeline is connected to the catalyst stirring tank;
the propylene feeding pipeline is connected to the catalyst stirring tank, the propylene cooling and separation column, and the loop reactor, respectively;
the ethylene feeding pipeline is connected to the vertical liquid-phase reactor and the loop reactor; the butene feeding pipeline is connected to the loop reactor.

2. The preparation device according to claim 1, **characterized in that** the catalyst pretreatment unit further comprises a catalyst drum hoist device, the bottom portion of the catalyst drum hoist device is connected to the top portion of the catalyst stirring tank.

3. The preparation device according to claim 1, **characterized in that** the vertical liquid-phase reactor is connected to the low-pressure bag filter; the loop reactor is equipped with a nuclear level detection system; the line connecting the loop reactor to the low-pressure bag filter is equipped with a low-pressure steam tracing system.

4. The preparation device according to claim 1, **characterized in that** the loop reactor has a diameter of 100-1000 mm, and the vertical liquid-phase reactor has a volume of 10-90 m³.

5. The preparation device according to claim 1, **characterized in that** the low-pressure degassing unit further comprises a filter, a deep chiller, and a compressor connected in sequence; the top portion of the low-pressure bag filter is connected to the middle portion of the filter, and the compressor is connected to the polymerization unit.

6. The preparation device according to claim 1, **characterized in that** the low-pressure bag filter is a cyclonic sintered-metal bag filter; an air-lock rotary valve is provided between the low-pressure bag filter and the integrated powder inactivation and drying machine.

7. The preparation device according to claim 1, **characterized in that** the powder inactivation and drying unit further comprises an additive unit, the additive unit comprising an additive dumping station and an additive feed scale connected in sequence, the additive feed scale is connected to the top portion of the drying zone;
a moisture content analyzer is provided at the top portion of a solid-gas separator III.

8. The preparation device according to any one of claims 1 to 7, **characterized in that** the preparation device further comprises a recovery unit;
an upper portion of the propylene water scrubber is connected to the recovery unit;
the film recovery unit is connected to gas-distribution device I and the recovery unit, respectively;
the top portion of the solid-gas separator III is connected to the gas-distribution device III and the recovery unit, respectively.

9. A preparation method for multicomponent copolymerized polypropylene, **characterized in that** the preparation method is performed in the preparation device according to any one of claims 1 to 8, comprises:
1) uniformly mixing the catalyst and propylene in a catalyst stirring tank, completing pre-treatment, and then feeding the mixture into a vertical liquid-phase reactor to perform polymerization;
2) in the vertical liquid-phase reactor, feeding the polymerization product to a loop reactor for further multicomponent copolymerization; sending tail gas generated during the reaction to the propylene cooling and separation column; and a portion of separated liquid-phase components is returned to the vertical liquid-phase reactor to continue participating in the reaction;
3) in the loop reactor, feeding the multicomponent copolymerization product to the low-pressure bag filter; sending separated solid powder to the integrated powder inactivation and drying machine; and the gas components are optionally filtered, cryogenically cooled, and compressed before being returned to the propylene cooling and separation column and/or the loop reactor;
4) successively deactivating, degassing, and drying the solid powder from the low-pressure bag filter in the integrated powder inactivation and drying machine, optionally mixing with an additive, and then discharging as the multicomponent copolymerized polypropylene product;
5) optionally recovering hydrocarbons from gas vent generated in steps 2) to 4).

10. The preparation method according to claim 9, **characterized in that** the catalyst comprises a main catalyst, a cocatalyst, an electron donor, a delipidation agent, hexane, and/or white oil.
